# EUROPEAN PATENT APPLICATION

(11) **EP 2 650 105 A1**
(43) Date of publication of application: **16.10.2013**
(21) Application number: 10860449.7
(22) Date of filing: 08.12.2010
(51) Int. Cl.: B29C 65/72, B29C 65/60

(54) **METHOD OF CONNECTING MEMBERS**

(71) Applicant: TOYOTA JIDOSHA KABUSHIKI KAISHA, Toyota-shi, Aichi-ken, 471-8571 (JP)
(72) Inventor: TAKAHASHI, Naoyuki, Toyota-shi Aichi 471-8571 (JP); KAWAMURA, Nobuya, Toyota-shi Aichi 471-8571 (JP)
(74) Representative: Jackson, Martin Peter
(86) International application number: PCT/JP2010/072003
(87) International publication number: WO 2012/077196

(57) **Abstract**

With respect to methods of connecting two or more members where at least one of them comprises a resin member, there is provided a method of connecting members that is capable of firmly connecting two or more members with a rivet without causing the matrix resin to crack even when a joining method that uses a self-pierce rivet is applied to the connecting method. The method of connecting members is a method of connecting members in which overlapping portions of two or more members are connected, the method comprising: disposing a resin member, whose matrix resin comprises a thermoplastic resin, at at least a bottom layer forming the overlapping portions; and, with the matrix resin melted by heat treating at least the resin member ofthe overlapping portions, driving in a self-pierce rivet from above a member at a top layer of the overlapping portions so that it reaches an interior of the resin member, and connecting the overlapping portions by curing the matrix resin.

## Description

### Technical Field

The present invention relates to a method of connecting members in which overlapping portions of two or more members are connected, and, in particular, to a method in which a resin member, whose matrix resin comprises a thermoplastic resin, is disposed at at least the bottom layer forming the overlapping portions, and the members are connected with one another by driving in a self-pierce rivet from above a member at the top layer of the overlapping portions.

### Background Art

Due to their light weight and high strength, fiber-reinforced plastics (FRPs) obtained by mixing a reinforcement fiber material into resin are used in various industries, e.g., automobile, construction, aviation, etc.

Further, with respect to methods of joining FRP members with one another, joining methods that use an adhesive, joining methods that use bolts, joining methods the combine the above, etc., are generally used.

With respect to joining members with one another, in cases where the members to be joined are made of an aluminum plate, a steel plate, etc., a joining method that uses self-pierce rivets is sometimes employed from among various joining methods such as spot welding, friction stir welding, mechanical clinching, brazing, screw clamping, etc.

In this joining method that uses a self-pierce rivet, for example two metal plates are mounted on a rivet die in a laminar attitude, the rivet die having a recessed groove in its mounting surface, and a rivet is positioned above the metal plates, the rivet being such that its side view, which comprises an end face and pierces protruding from this end face, is shaped like an arch. The rivet is driven into the metal plates with a punch so as to penetrate the upper plate, and the tips of the two pierces of the rivet flare outward during this process. The tips of the pierces flare further within the lower plate as the rivet is driven further in, and the upper and lower metal plates are plastically deformed over the course of driving the pierces in, thereby interlockingly connecting the two via the pierces.

With a joining method that uses a self-pierce rivet, there is no need to, for example, open a hole in the upper metal plate in advance. Further, it is also possible to join three, four, etc., metal plates with one another. It is thus possible to join, efficiently and with high mechanical strength, two or more metal members with one another.

Attempts have been made to apply joining methods that use a self-pierce rivet, which have various advantages as discussed above, to the above-mentioned joining of FRP members with one another. Details thereof are also disclosed in Patent Literature 1, which is public art. The joining method disclosed therein is one where an adhesive is applied between two FRP members to be joined, a self-pierce rivet is driven in while the adhesive is still uncured, and the rivet is made to penetrate the upper FRP member, while making its tip remain within the lower FRP member.

However, the present inventors have identified that, when joining methods that use a self-pierce rivet are applied to the connecting of members with one another where at least one of the members to be connected is an FRP member as in the case above, the matrix resin may crack or the FRP fibers may be severed due to the piercing by the tip of the rivet, thereby making it difficult for the rivet and the FRP member to be sufficiently secured like metal plates. Thus, the connecting method disclosed in Patent Literature 1 is essentially the same as joining the connecting portions of the FRP members with an adhesive alone. Consequently, a firm interlocking connection structure, which a self-pierce rivet joint would provide, cannot be formed, resulting in a connection structure that is susceptible to such external forces as shear, bending, etc.

### Citation List

### Patent Literature

Patent Literature 1: JP Patent Application Publication (Kokai) No. 2007-229980 A

### Summary of Invention

### Technical Problem

The present invention is made in view ofthe problems mentioned above. An object of the present invention is to provide a method of connecting two or more members where at least one of the members comprises a resin member, the method being capable of connecting the two or more members firmly with a rivet without causing the matrix resin to crack even when a joining method that uses a self-pierce rivet is applied to this connecting method.

### Solution to Problem

To achieve the object above, a method of connecting members according to the present invention comprises a method of connecting members in which overlapping portions of two or more members are connected, the method comprising: disposing a resin member, whose matrix resin comprises a thermoplastic resin, at at least the bottom layer forming the overlapping portions; and, with the matrix resin melted by heat treating at least the resin member of the overlapping portions, driving in a self-pierce rivet from above the member at the top layer ofthe overlapping portions so that it reaches the interior of the resin member, and connecting the overlapping portions by curing the matrix resin.

In connecting two or more members using a self-pierce rivet, a method of connecting members of the present invention disposes a resin member, whose matrix resin is a thermoplastic resin, at least as the member at the bottom layer where the tips of pierces are to remain, and, with the matrix resin melted by heat treating at least this resin member at the bottom layer, drives in the self-pierce rivet to achieve connection.

The rivet is driven in from above the member at the top layer, and the rivet penetrates all members except the member at the bottom layer. Over the course of this process, the tips of the rivet are deformed sideways and flare, and the tips thus try to remain inside the member at the bottom layer. In so doing, by having the member at the bottom layer be melted, such problems as the resin member at the bottom layer cracking upon driving the rivet in, etc., are effectively solved.

With respect to "disposing a resin member, whose matrix resin comprises a thermoplastic resin, at at least the bottom layer" as mentioned above, there are diverse variations for the combinations of members to be joined in addition to one where, of a plurality of members, only the member at the bottom layer is a resin member whose matrix resin comprises a thermoplastic resin, e.g.: a configuration where, in the case of connecting two members, both of those members comprise resin members whose matrix resin comprises a thermoplastic resin; a configuration where, in the case of connecting three members, all of the members comprise a resin member whose matrix resin comprises a thermoplastic resin, or where two of the three members, such as the top layer and the bottom layer, or the middle layer and the bottom layer, comprise a resin member whose matrix resin comprises a thermoplastic resin with the remaining member comprising a resin member, whose matrix resin comprises a thermosetting resin, or a metal plate of aluminum, or an alloy thereof, or a high tensile strength steel plate, etc; and so forth.

For the thermoplastic resin above, in addition to polyolefin resins, e.g., polypropylene, polyethylene, etc., polystyrene resins, ABS resins, polyvinyl chloride resins, polyamide resins, polyester resins, polyacetal resins, polycarbonate resins, etc., it is also possible to employ thermoplastic epoxy resins, etc.

In laying two or more members on top of one another, by having at least the member at the bottom layer be a member whose matrix resin comprises a thermoplastic resin, the matrix resin may be melted by heating at least the member at the bottom layer when driving the rivet in.

By "with the matrix resin melted by heat treating at least the resin member," what is meant encompasses, for example in the case of connecting two members, melting both members, as well as melting only the member at the bottom layer.

By way of example, by processing the inner sides of the tips of the rivet into a shape that is so tapered as to be sharp at the tip, when this rivet is driven in while the member at the upper layer is not melted, as the rivet penetrates the member at the upper layer, which is in an unmelted state and stiffer, its tips flare readily due to the stiff upper layer member on the inside of the rivet. After its tips have reached the interior of the molten member at the bottom layer, the member at the bottom layer is cured, thereby placing the tips within the resin member at the bottom layer.

On the other hand, even in cases where the member at the upper layer is melted in addition to the member at the bottom layer, the resin member in its molten state may sometimes be, depending on the extent to which the matrix resin is melted, stiff enough to cause the rivet that is driven into the member to flare outward. If such is the case and the matrix resin of the molten upper layer member has the desired stiffness, the rivet may be deformed as desired so as to flare within the member even when the rivet is driven in with all of the members to be connected melted.

By connecting two or more members with a self-pierce rivet, two or more members may be interlockingly connected firmly by the frictional force between the rivet, which has been caused to flare sideways within each member, and each of the members.

Further, the configuration may also be such that the above-mentioned resin member comprises a fiber-reinforced resin member comprising a fiber material inside the matrix resin.

Examples ofthis fiber material may include: ceramic fibers, e.g., silicon carbide fibers, alumina fibers and silicon nitride fibers; inorganic fibers, e.g., glass fibers and carbon fibers; metal fibers, e.g., copper fibers, steel fibers, stainless steel fibers, aluminum fibers and aluminum alloy fibers; organic fibers, e.g., polyester fibers, polyamide fibers and aramid fibers, etc.; and so forth.

By employing a connecting method of the present invention, because the matrix resin of the member at the bottom layer is in a molten state when the rivet is driven in, even if the member of the bottom layer is a fiber-reinforced resin member comprising a fiber material within the matrix resin, it is possible to place the rivet tips within the member at the bottom layer without causing the matrix resin of the member at the bottom layer to crack due to the rivet being driven in, and, further, without severing the fiber material.

In melting the resin member at the bottom layer, this resin member at the bottom layer may be mounted on a rivet die with a built-in heater, and the matrix resin may be melted through heat treatment by the heater.

By thus employing a rivet die with a built-in heater, it is possible to effectively melt just the resin member at the bottom layer.

Further, if, for example, all of the members may be melted, a device integrally comprising a high-temperature furnace and a punch for self-pierce rivet connection, and so forth, may be used to drive a rivet, which is temporarily secured to the tip of the punch, in by making the interior of the high-temperature furnace be a high-temperature atmosphere, melting, for example, the connecting portions of all members, and thereafter operating the punch.

Further, the configuration may be such that the self-pierce rivet's side view, which comprises an end face and pierces protruding from this end face, is shaped like an arch. When this is driven in at the overlapping portions, the pierces deform sideways as their tips interlock inside the resin member. A recessed groove is provided in the resin member mounting surface of the rivet die, and as the pierces deform, portions thereof enter the recessed groove, thereby connecting the overlapping portions.

By way of example, a ring-shaped recessed groove may be provided in the mounting surface of the rivet die. When connecting two or more members thereon, as the resin member at the bottom layer, which is directly mounted on the rivet die, melts, the molten resin enters the recessed groove. Further, due to the press force exerted when the rivet is driven in from above the member at the top layer, the member at the top layer and the middle member are so deformed as to emulate the undulating shape of the molten resin at the bottom layer which undulates on the mounting surface ofthe rivet die. The pierces ofthe rivet that is driven in are deformed outward and flare over the course of this driving process, and the tips of the pierces ultimately enter the recessed groove into which the molten resin member at the bottom layer has entered.

With this connecting method, the bottom surface of the connecting portions of the two or more members is given a shape that is complementary with respect to the recessed groove formed in the mounting surface of the rivet die.

### Advantageous Effects of Invention

As can be understood from the description above, with a method of connecting members of the present invention, a resin member, whose matrix resin comprises a thermoplastic resin, is disposed at at least the bottom layer forming overlapping portions of two or more members to be connected. With the matrix resin melted by heat treating the above, a self-pierce rivet is driven in from above the member at the top layer so that it reaches the interior of this melted resin member, and the matrix resin is cured to connect the overlapping portions. Thus, the resin member does not crack when the rivet is driven in, and the members may be connected with one another so as to have high connection strength.

### Brief Description of Drawings

Fig. 1(a) is a vertical sectional view of a cylinder mechanism and a rivet die for use in self-pierce rivet connection, and (b) is a view of (a) as seen in the direction of arrows b-b.
Fig. 2 is a view illustrating a state where overlapping portions of two members are mounted on a mounting stage of a rivet die.
Fig. 3 is a view illustrating a state where a lower resin member is melted with a heater within a rivet die, and where a rivet is being driven in.
Fig. 4 is a view illustrating a state where a rivet has been driven in completely, and a lower resin member is cured, thereby connecting two members.
Fig. 5 is a schematic view showing a state where two resin members forming a vehicle body have been connected by a connecting method of the present invention.
Fig. 6 is a graph showing experiment results from measuring the shear strength of the respective connecting portions of two members connected by a connecting method of the present invention (Example) and of two members connected by a conventional connecting method (Comparative Example).

### Reference Signs List

- 1:: Cylinder
- 2:: Punch
- 3:: Rivet die
- 3a:: Mounting surface
- 3b:: Recessed groove
- 4:: Heater
- 5:: Rivet
- 5a:: Pierce
- 5b:: End face
- 6, 6A:: Lower member (fiber-reinforced resin member)
- 7, 7A:: Upper member (fiber-reinforced resin member)
- 8:: Reinforcement member

### Description of Embodiments

Embodiments of a method of connecting members of the present invention are described below with reference to the drawings. Although the illustrated examples show a method of connecting two members, three or more members may of course be connected using the illustrated method.

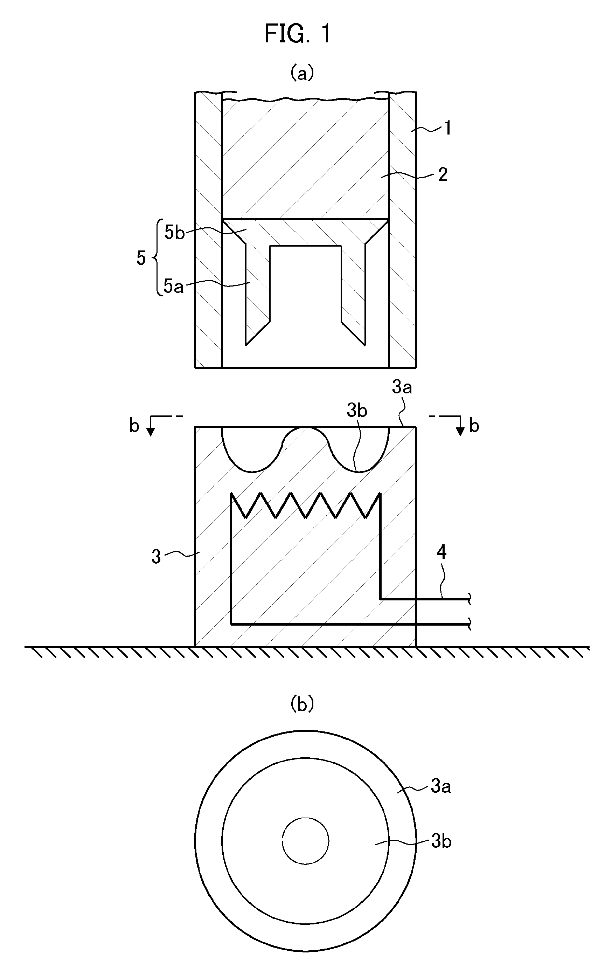

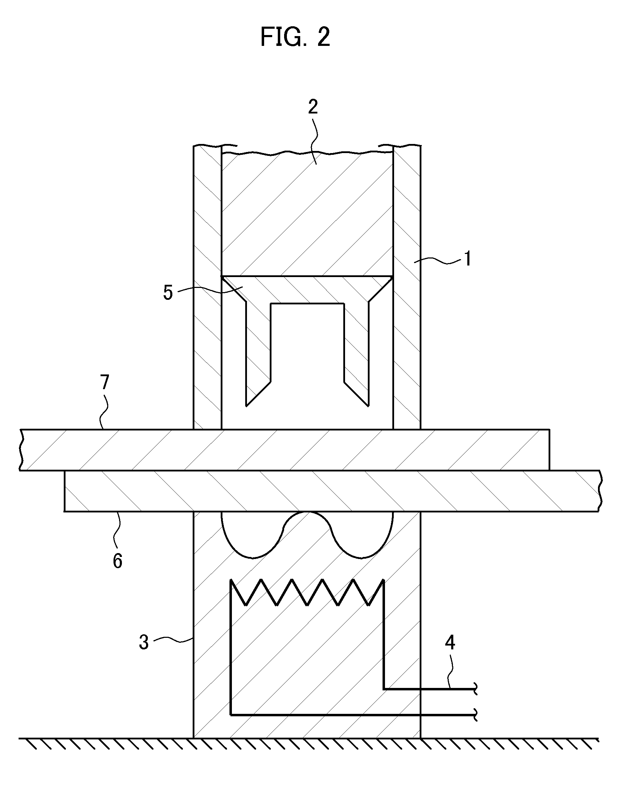

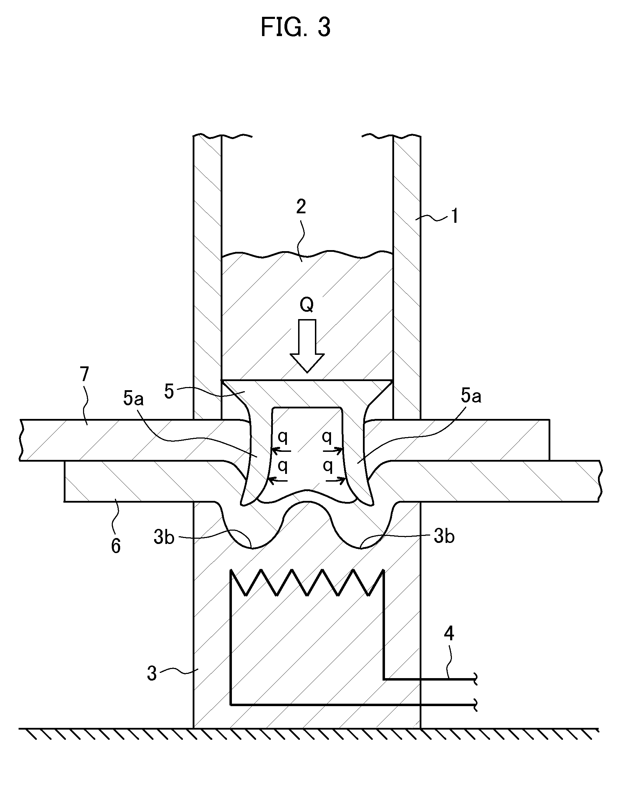

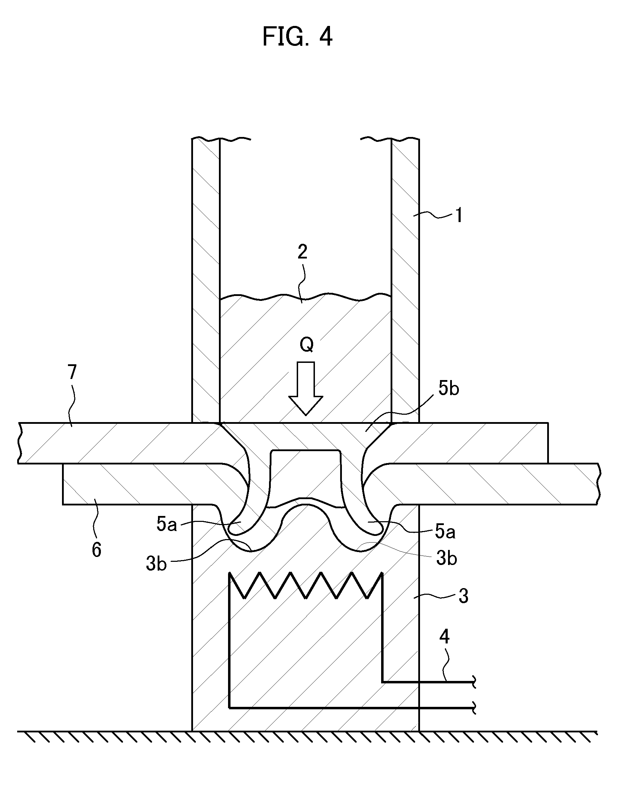

Figs. 1 to 4, in order, are flow diagrams illustrating a method of connecting members of the present invention. Specifically, Fig. 1 is a vertical sectional view of a cylinder mechanism and rivet die for use in self-pierce rivet connection. Fig. 2 is a view illustrating a state where two members are mounted on a mounting stage of the rivet die. Fig. 3 is a view illustrating a state where the lower resin member is melted with a heater within the rivet die, and where the rivet is being driven in. Fig. 4 is a view illustrating a state where the rivet has been driven in completely, and the lower resin member is cured, thereby connecting the two members.

A method of connecting two, namely an upper and lower, fiber-reinforced resin members with each other by applying a method of connecting members of the present invention is described below.

As shown in Fig. 1a, there is prepared a production system comprising: a rivet die 3 on which overlapping portions formed by laying portions of the two fiber-reinforced resin members on top of each other are to be mounted; and a cylinder mechanism positioned thereabove and in which a punch 2 is freely slidable within a cylinder 1.

As shown in Fig. 1b, the rivet die 3 is circular in plan view. A ring-shaped recessed groove 3b is formed in a mounting surface 3a on which the fiber-reinforced resin members are to be mounted.

Further, a heater 4 is built into the rivet die 3.

Within the cylinder 1, a rivet 5 is adapted to be temporarily securable by suction, etc. to the lower surface of the punch 2, which slides within the cylinder 1.

The rivet 5 used is such that its side view, which comprises an end face 5b that is circular in plan view and pierces 5a that protrude from this end face 5b, is shaped like an arch, and the material from which it is formed may be aluminum, an alloy thereof, steel, etc.

As shown in Fig. 2, overlapping portions of an upper member 7 and a lower member 6, each comprising a fiber-reinforced resin member, are positioned on the mounting surface 3a of the rivet die 3 which forms the production system that has been prepared, and the cylinder 1 is set above the upper member 7.

Here, of the fiber-reinforced resin members forming the upper member 7 and the lower member 6, the matrix resin of at least the lower member 6 comprises a thermoplastic resin, and some appropriate fiber material is mixed into this matrix resin.

For the thermoplastic resin to be used as the matrix resin of at least the lower member 6, there may be employed one of, or a mixture material of two or more of: a polyolefin resin, e.g., polypropylene, polyethylene, etc.; a polystyrene resin; an ABS resin; a polyvinyl chloride resin; a polyamide resin; a polyester resin; a polyacetal resin; and a polycarbonate resin, etc.; as well as a thermoplastic epoxy resin; and so forth.

In addition, for the fiber material to be mixed into this thermoplastic resin, there may be employed one of, or a mixture material of two or more of a ceramic fiber, e.g., a silicon carbide fiber, an alumina fiber, or a silicon nitride fiber; an inorganic fiber, e.g., a glass fiber or a carbon fiber; a metal fiber, e.g., a copper fiber, a steel fiber, a stainless steel fiber, an aluminum fiber, or an aluminum alloy fiber; and an organic fiber, e.g., a polyester fiber, a polyamide fiber, or an aramid fiber.

The lower member 6 may also be a resin member whose matrix resin comprises a thermoplastic resin but into which no fiber material is mixed.

The upper member 7 may also be a fiber-reinforced resin member whose matrix resin comprises a thermosetting resin and into which a fiber material is mixed, a resin member into which no fiber material is mixed, or, further, a member comprising a metal material, e.g., aluminum, an alloy thereof, a high tensile strength steel plate, etc.

With the overlapping portions of the upper member 7 and the lower member 6 positioned on the mounting surface 3a, the heater 4 built into the rivet die 3 is operated, and the lower member 6 is heated via the rivet die 3. More specifically, the lower member 6 is heat treated at a temperature equal to or greater than the melting point of the thermoplastic resin employed as the matrix resin of the lower member 6, thereby melting this matrix resin.

It is noted that even as the matrix resin of the lower member 6 is melted, the matrix resin of the upper member 7 is not. Thus, the upper member 7 is stiffer than the lower member 6.

As shown in Fig. 3, with just the lower member 6 melted, the punch 2 is slid within the cylinder 1 to press the rivet 5 towards the upper member 7 from the punch 2 (pressing force Q). The pierces 5a of the rivet 5 are thus driven into, and penetrate, the upper member 7. Further, the tips of the pierces 5 a enter the molten lower member 6.

Then, as they penetrate the upper member 7, the pierces 5 a are subjected to pressure q from the inside and thus flare outward. Further, as they are driven into the molten lower member 6, they are again subjected to pressure from the inside and thus flare outward. Various factors cause the two pierces 5a, 5a to be thus deformed outward as the rivet 5 is driven in, e.g., the fact that the inner sides of the tips of the pierces 5a are formed in a tapered shape that is sharp at the tip, the fact that the center portion encircled by the ring-shaped recessed groove 3b provided in the mounting surface 3a of the rivet die 3 forms an upward protrusion inside of the two pierces 5a, 5a, the fact that a relatively stiff member is present inside of the two pierces 5a, 5a, and so forth.

The rivet 5 is then driven in until the end face 5b of the rivet 5 becomes flush with the upper surface of the upper member 7. The molten lower member 6 is subsequently cured, as a result of which the overlapping portions of the upper member 7 and the lower member 6 are connected.

As shown in Fig. 4, the pierces 5a of the rivet 5 flare outward in such a manner that portions thereof are received within the recessed groove 3b in the mounting stage 3. Through the frictional force between the pierces 5a and the upper member 7 as well as the lower member 6, the members 6 and 7 are both connected firmly.

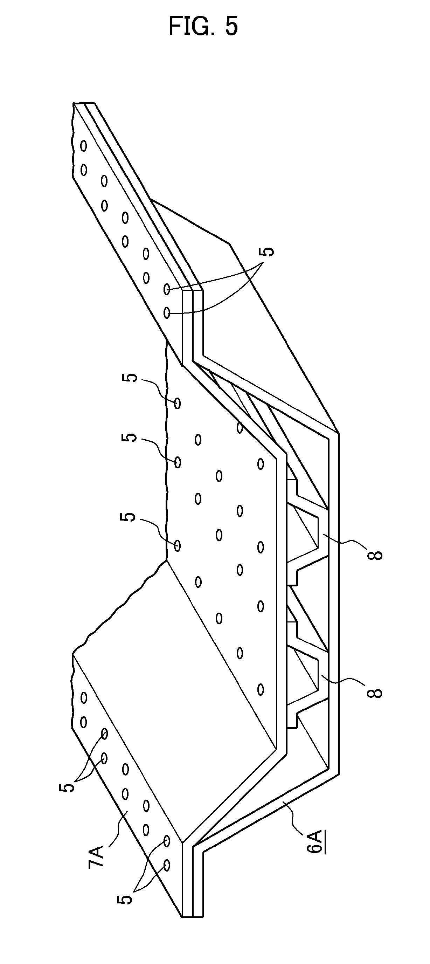

Fig. 5 is a view illustrating an example in which the above-mentioned connecting method is employed. It is a schematic view showing a state where two fiber-reinforced resin members forming a vehicle body are connected.

In the illustrated example, the vehicle body comprises two fiber-reinforced resin members, namely an upper member 7A and a lower member 6A, and a reinforcement member 8 placed therebetween. The upper member 7A and the lower member 6A are connected with each other by the above-mentioned connecting method, as are the upper member 7A and the reinforcement member 8. In this view, the locations, where the end faces of the illustrated rivets 5 are, are the locations connected by the above-mentioned connecting method.

With respect to the rivet joining conditions, the pressing force of the punch may be adjusted to approximately 0.6 to 0.8 MPa, and the rivet die temperature may be adjusted to approximately 85°C to 120°C if polypropylene is used for the thermoplastic resin, to approximately 150°C to 200°C if polyamide (PA6) is used for the thermoplastic resin, or to approximately 190°C to 250 °C ifpolyamide (PA66) is used.

The illustrated vehicle body comprises two light-weight and high-strength fiber-reinforced resin members that are connected.

Further, even though self-pierce rivet joining is employed in connecting the fiber-reinforced resin members with each other, no cracks occur in the fiber-reinforced resin members that are connected, and the fiber material does not become severed. The vehicle body thus has high connection strength and high strength, and is light in weight.

### [Experiment in which shear strength is measured for the respective connecting portions of two members connected by a connecting method of the present invention (Example) and two members connected by a conventional connecting method (Comparative Example), and results thereof]

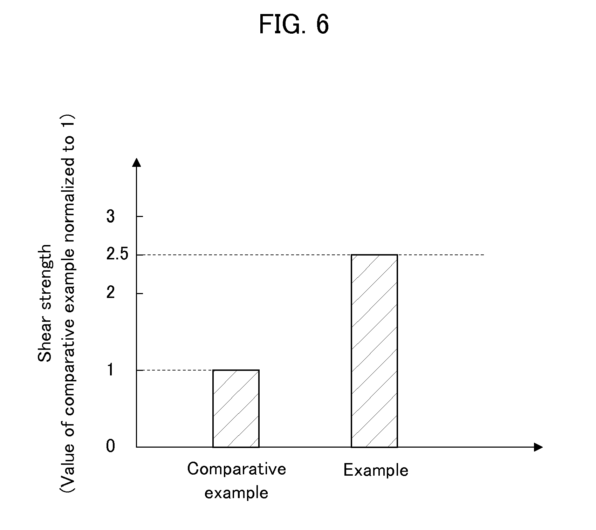

The present inventors prepared a specimen obtained by connecting two fiber-reinforced resin members by a connecting method of the present invention (Example) and a specimen obtained by connecting two fiber-reinforced resin members by driving in rivets without heating and melting one ofthe members (Comparative Example). Each was clamped to a tensile tester, and pulled at a tension rate of 5 mm/min to measure its shear strength. The measurement results are shown in Fig. 6.

In Fig. 6, the shear strength of the Comparative Example is normalized to 1, and the shear strength of the Example is expressed as a ratio relative to the Comparative Example.

As can be seen in Fig. 6, it was demonstrated that the shear strength of the Example improves by a factor of 2.5 relative to the Comparative Example. The respective specimens of the Example and the Comparative Example were observed, which revealed that the fibers of the lower fiber-reinforced resin member of the specimen of the Comparative Example had been severed as a result of driving in the rivets, whereas no severing of fibers or cracks in the fiber-reinforced resin member were observed in the specimen of the Example.

The fact that the two fiber-reinforced resin members are connected without any severing of fibers is a factor that contributes to the significantly increased shear strength at the connecting portions.

Embodiments of the present invention have been described above in detail using the drawings. However, the structure is by no means specifically limited to these embodiments. Design modifications, etc., made within a scope that does not depart from the spirit of the present invention are encompassed by the present invention.

## Claims

1. A method of connecting members in which overlapping portions of two or more members are connected, the method comprising:
disposing a resin member, whose matrix resin comprises a thermoplastic resin, at at least a bottom layer forming the overlapping portions; and
with the matrix resin melted by heat treating at least the resin member of the overlapping portions, driving in a self-pierce rivet from above a member at a top layer of the overlapping portions so that it reaches an interior of the resin member, and connecting the overlapping portions by curing the matrix resin.

2. The method of connecting members according to claim 1, wherein the resin member comprises a fiber-reinforced resin member comprising a fiber material inside the matrix resin.

3. The method of connecting members according to claim 1 or 2, wherein the resin member at the bottom layer is mounted on a rivet die with a built-in heater, and the matrix resin is melted through heat treatment by the heater.

4. The method of connecting members according to one of claims 1 to 3, wherein
the self-pierce rivet's side view, which comprises an end face and pierces protruding from the end face, is shaped like an arch, and as the self-pierce rivet is driven in at the overlapping portions, the pierces deform sideways, while their tips interlock at the interior of the resin member, and
a recessed groove is provided in a resin member mounting surface of the rivet die, and, as the pierces deform, portions thereof enter the recessed groove to connect the overlapping portions.

5. The method of connecting members according to one of claims 1 to 4, wherein all of the members to be connected comprise a fiber-reinforced resin member, whose matrix resin comprises a thermoplastic resin and which comprises a fiber material thereinside.
